# EUROPÄISCHE PATENTSCHRIFT

(11) **EP 0 658 725 B1**
(45) Veröffentlichungstag und Bekanntmachung des Hinweises auf die Patenterteilung: **27.01.1999**
(21) Anmeldenummer: 94117391.6
(22) Anmeldetag: 04.11.1994
(51) Int. Cl.: F24D 10/00

(54) **Verfahren und Vorrichtung zum Regeln des Durchflusses in einer Fernwärmeübergabestation**
Method and device for controlling the flow in a district heating distribution station
Méthode et dispositif pour régler le débit dans une sous station pour chauffage urbain

(30) Priorität: 14.12.1993 DE 4342531
(43) Veröffentlichungstag der Anmeldung: 21.06.1995
(73) Patentinhaber: IWK Regler und Kompensatoren GmbH, D-76288 Stutensee-Blankenloch (DE)
(72) Erfinder: Mall, Horst, Dipl.-Ing., D-76131 Karlsruhe (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- DD-A- 269 428
- DE-C- 464 893
- US-A- 2 059 121

## Beschreibung

Die Erfindung betrifft ein Verfahren und eine Vorrichtung zum Regeln des Durchflusses in einer Fernwärmeübergabestation.

In einer Fernwärmeübergabestation muß der hohe Druck der Fernwärmeleitung zu dem fernbeheizten Gebäude hin reduziert werden, wobei gleichzeitig in dessen Leitungssystem ein gewisser Druck geregelt aufrechtzuerhalten ist. Darüber hinaus erfolgt über den Durchfluß durch die Fernwärmeübergabestation auch eine Temperaturregelung. Die Leitungsdurchmesser in größeren Fernwärmeübergabestationen liegen in der Regel oberhalb einer Nennweite von DN 50. Zur Erzielung einer hohen Regelgenauigkeit bei diesen Nennweiten werden Druckregler in Hilfssteuerschaltung mit sogenannten Pilotventilen eingesetzt.

Es hat sich herausgestellt, daß diese Hilfssteuersysteme anfällig gegen Schwingungen sind und daher instabil arbeiten; diese Instabilitäten können letztendlich durch hydraulische Mitkopplung auf das gesamte Rohrnetz in nachteiliger Weise übertragen werden. Ein solcher instabiler Zustand muß unbedingt vermieden werden, da er Druckstöße verursacht, die zu einer Gefahr des Berstens von Anlagenteilen oder auch von Radiatoren bei direkter Heißwasserübergabe vom Erzeuger zum Verbraucher führen können.

Darüber hinaus sind die auftretenden Stellwege der Druckregler einer Wärmeübergabestation bedingt durch hohe Laständerungen vor allem bei Schwachlastbetriebsweise im Sommer, wenn nur Brauchwasser benutzt wird und die Heizung abgestellt ist, sehr schwierig auszuregeln. Man versucht, den Regelprozeß durch Signaldämpfung stabil zu halten, wodurch aber die Ausregelgeschwindigkeit sehr gering ist. Auch helfen oft zusätzliche Dämpfungsmaßnahmen nichts, so daß derartige Hilfssteuerschaltungen stets mit Kompromissen betrieben werden.

In der US-A-2,059,121 wird ein Druckregelsystem für ein gasförmiges Medium mit Drücken oberhalb Atmosphärendruck in Pipelines oder dgl. beschrieben, mit welchem auch bei relativ geringen Gasdrücken für ein gleichmäßiges Druckniveau am Auslaß des Druckreglers in der Hauptleitung gesorgt werden soll. Hierbei soll eine Druckminderung in Verteilerleitungen an einer Verteilerstelle abgehend von Übertragungsleitungen erfolgen. Das Druckregelsystem weist dabei an der Verteilerstelle der Hauptleitung einen Durchflußregler und in einem Bypaß einen Steuerregler zur Durchflußsteuerung durch ein Venturirohr auf. Die Regelung des Durchflusses erfolgt über die Druckdifferenz zwischen der Zuflußseite zum Durchflußregler in der Hauptleitung und dem Druck im Bereich der Verengung des Venturirohrs im Bypaß, so daß das Hauptventil des Druckreglers in der Hauptleitung bei geringen Durchflüssen geöffnet ist und bei einem zu hohen Druck an der Auslaßseite des Druckreglers mittels eines Membranantriebs des Druckreglers geschlossen wird.

Ausgehend von dem vorgenannten Stand der Technik liegt der Erfindung die Aufgabe zugrunde, ein Verfahren und eine Vorrichtung zu schaffen, bei denen unter Vermeidung der genannten Nachteile in preisgünstiger Weise eine stabile Regelung möglich ist.

Erfindungsgemäß wird die genannte Aufgabe durch ein Verfahren mit den Merkmalen des Anspruchs 1 und durch eine gattungsgemäße Vorrichtung mit den Merkmalen des Anspruchs 5 gelöst.

Erfindungsgemäß wird also eine Bypaßschaltung vorgesehen, d.h. parallel zum Hauptventil in der Hauptleitung ein Bypaß angeordnet, in dem neben einem eigenen Regler, sei es einem Druckminderer, einem Überströmventil oder einem motorisch oder von einem Thermofühler beaufschlagten Ventil, insbesondere ein Querschnittsminderer zur Erzeugung einer Druckdifferenz in Form einer Venturidüse, eines Venturirohrs, eines Dallrohrs oder dgl. angeordnet ist. Hierdurch wird erreicht, daß bei geringen Durchflüssen, wie sie insbesondere im Sommerlastbetrieb gegeben sind, das Hauptventil völlig geschlossen gehalten werden kann und die Durchflußregelung lediglich über den Bypaß erfolgt. Erst bei Überschreiten einer vorgegebenen Druckdifferenz am Querschnittsminderer, wie dem Venturirohr, wird das Hauptventil sanft zugeschaltet (bzw. bei Unterschreiten einer Druckdifferenz wieder sanft geschlossen). Hierdurch werden die eingangs genannten nachteiligen Schwingungsvorgange zuverlässig vermieden.

In alternativer Weise kann vorgesehen sein, daß in der Bypaßleitung der Durchfluß ohne Hilfsenergie geregelt wird oder der Durchfluß im Bypaß mittels Hilfsenergie geregelt wird. In weiterer Ausgestaltung kann vorgesehen sein, daß der Durchfluß in der Bypaßleitung durch einen Thermostaten geregelt wird.

Weitere Vorteile und Merkmale der Erfindung ergeben sich aus den Ansprüchen und aus der nachfolgenden Beschreibung, in der Ausführungsbeispiele der Erfindung unter Bezugnahme auf die Zeichnungen im einzelnen erläutert sind. Dabei zeigt:
- Figur 1: eine schematische Darstellung für eine erste Ausgestaltung der erfindungsgemäßen Vorrichtung mit Druckminderer;
- Figur 2: eine schematische Darstellung für eine andere Ausgestaltung der erfindungsgemäßen Vorrichtung mit einem Überströmregler;
- Figur 3: eine weitere Ausgestaltung der erfindungsgemäßen Vorrichtung mit einem hilfsgesteuerten Temperaturregler;
- Figur 4: eine Ausgestaltung der erfindungsgemäßen Vorrichtung mit einer Kombination von Druckminderer und Temperaturregler; und
- Figur 5: eine Seitenansicht einer konkreten konstruktiven Ausgestaltung der erfindungsgemäßen Vorrichtung mit einem Druckminderer, teilweise geschnitten.

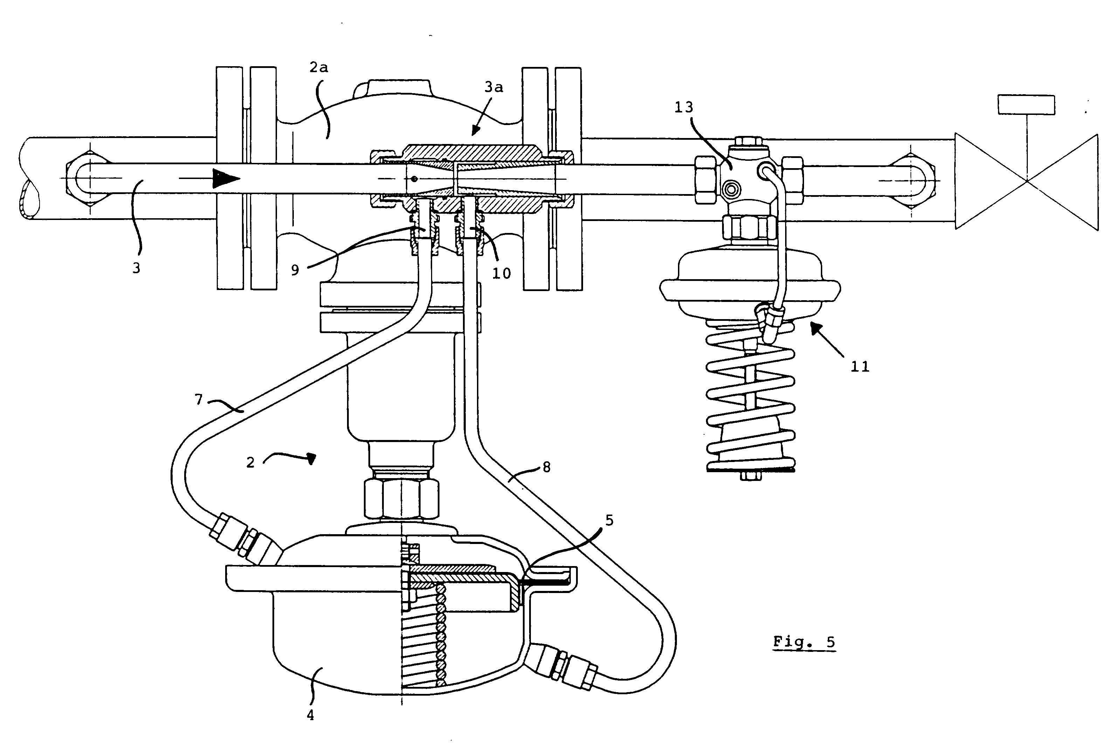

Die erfindungsgemäße Vorrichtung weist in den dargestellten Ausführungsbeispielen eine Hauptleitung 1 in einer Fernwärmeübergabestation zur Heißwasserübergabe vom Fernwärmenetz an das Netz eines Gebäudes oder dgl. auf. In der Fernwärmeübergabestation ist eine geregelte Druckreduzierung erforderlich. In der Hauptleitung 1 befindet sich daher ein hilfsgesteuertes Hauptventil 2a, welches den Druck von einem Druck P1 auf einen Druck P2 reduziert. Die Hauptleitung hat eine Nennweite von DN 50 bis DN 250. Ein Bypaß 3 über dem Hauptventil 2a weist beispielsweise eine Nennweite von DN 20 auf. Im Bypaß 3 befindet sich ein Querschnittsminderer 3a, der lokal eine Reduktion des Querschnittes bis auf beispielsweise einen Durchmesser von 12 mm bewirkt. Der Querschnittsminderer 3a kann eine Venturidüse, ein Venturirohr oder ein Dallrohr sein und ist insbesondere eine Venturidüse, wie sie in konkreter Ausbildung der Figur 5 zu entnehmen ist.

Der hilfsgesteuerte Druckregler in Form des Haupt-Regelorgans 2 weist einen Membranantrieb 4 auf. Der Membranantrieb 4 weist eine auf seine Membran 5 wirkende Schließfeder 6 auf, die im Sinne eines Schließens des Hauptventils 2a wirkt.

Die beiden Teilkammern des Membranantriebs 4 beidseits der Membran 5 sind über Steuerleitungen 7,8 mit Einlässen 9,10 der Düse 3a verbunden, und zwar der stromauf der engsten Stelle der Düse 3a gelegene Einlaß 9 über die Leitung 7 mit der dem Hauptventil 2a des Regelorgans 2 zugewandten Seite des Membranantriebs 4, der Einlaß 10 über die Leitung 8 mit der dem Hauptventil 2a abgewandten Seite des Membranantriebs 4, also dem Kammerteil, in dem sich die Schließfeder 6 befindet.

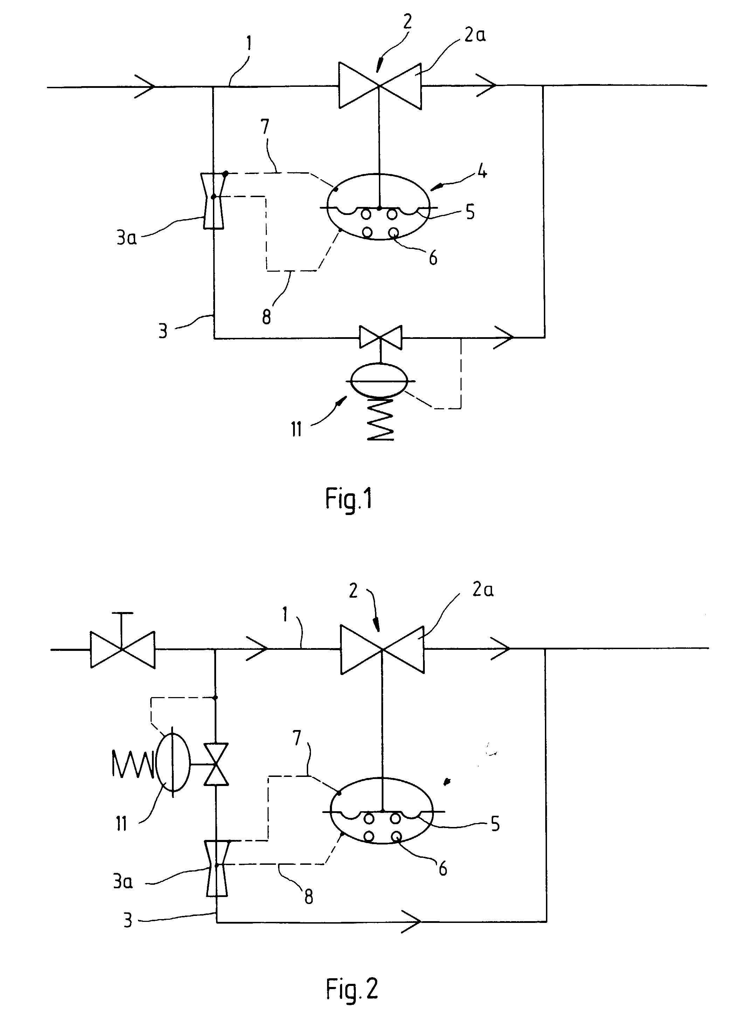

In dem Bypaß 3 findet sich weiterhin ein automatisch arbeitendes Regelorgan 11 und zwar in der Figur 1 als fremdenergiefreier Druckminderer.

Durch die Festlegung des verminderten Querschnitts der Düse 3a wird beim Durchströmen ein einstellbarer, in der Praxis etwa 0,5 bis 0,8 bar betragender Unterdruck auf der stromab gelegenen Seite der Verengung erzeugt, mit dem die genannte, dem Ventil 2a abgewandte Kammer des Membranantriebs beaufschlagt wird. An der anderen Kammer des Membranantriebs steht der Druck vor dem Querschnittsminderer 3a, also der Venturidüse an.

Der Differenzdruck ist abhängig vom Volumenstrom durch die Bypaßleitung und steuert so den Membranantrieb. Solange der Differenzdruck eine insbesondere durch die Schließfeder 6 vorbestimmte Größe unterschreitet, bleibt das Hauptventil 2a geschlossen und die Regelung des Druckes P2 erfolgt lediglich über den Druckminderer 11. Erst beim größeren Durchfluß durch die Bypaßleitung öffnet das Ventil 2a des Haupt-Regelorgans 2 aufgrund des größeren Differenzdruckes gegen die Wirkung der Feder 6, so daß das Regelorgan 2 sanft zugeschaltet wird. Durch dieses sanfte Zuschalten des Haupt-Regelorgans werden gefährliche Schwingungen im Regelkreis praktisch ausgeschlossen. Bei Unterschreiten eines vorgegebenen Durchflusses durch den Bypaß 3 wird das Haupt-Regelorgan in gleicher Weise sanft geschlossen.

Der dem Hauptventil 2a zugeordnete Membranantrieb 4 des Haupt-Regelorgans 2 wird gleichzeitig stets von einem Druck gesteuert, der nicht die eigentliche Regelgröße ist, d.h. nicht von dem Differenzdruck über das Hauptventil 2a, sondern eben von dem Druckabfall am Querschnittsminderer 3a. Hierdurch ergibt sich der Vorteil, daß die gesamte Vorrichtung nicht vom eigentlichen Istwert-Druck P1 beeinflußt wird und daher rückwirkungsfrei ist.

Die Ausgestaltung der Figur 2 zeigt eine erfindungsgemäße Vorrichtung mit einem Regelorgan in Form eines hilfsgesteuerten Überströmventils. Hierbei ist der Hilfsregler 11 in Form eines Überströmreglers in der Bypaßleitung 3 stromauf des Querschnittsminderes 3a (wiederum ein Venturirohr) angeordnet. Die Funktionsweise ist grundsätzlich die gleiche, wie sie unter Bezug auf Figur 1 beschrieben wurde.

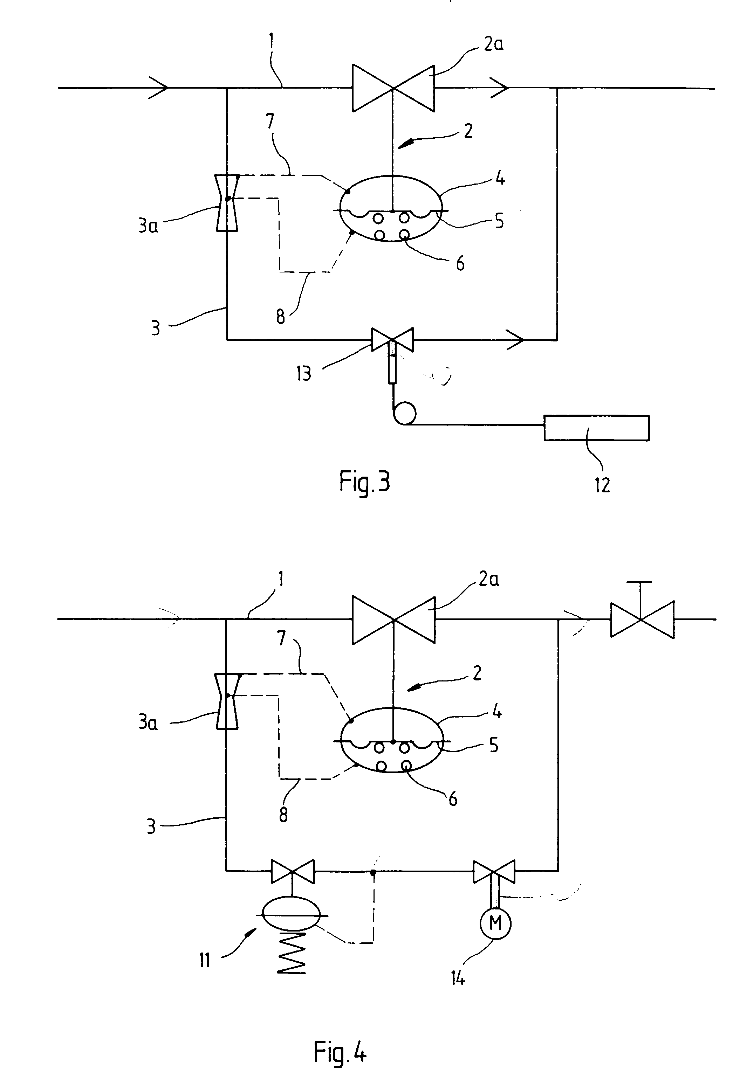

Bei der Ausgestaltung der Figur 3 handelt es sich um einen hilfsgesteuerten Temperaturregler, der in Form eines Temperaturfühlers 12 anstelle des Regelorgans 11 entweder mechanisch auf ein Ventil 13 in der Bypaßleitung 3 stetig wirkt oder aber mittels eines motorischen Antriebs für das Ventil 13. Auch hier wird der Vorteil des sanften Zu- und Abschaltens des Hauptventils 2a des Haupt-Regelorgans 2 in der Hauptleitung 1 in gleicher Weise erzielt, wie dies bei den Ausgestaltungen der Figuren 1 und 2 der Fall ist.

Die Figur 4 zeigt nun die Kombination eines Hilfsreglers 11 in Form eines Druckminderers mit einem zusätzlichen Steuerorgan, wie einem Motorventil 14 oder einem mechanischen Thermostat, wie dies in bezug auf Figur 3 erläutert wurde.

Die Figur 5 zeigt eine konkrete Ausgestaltung der in Figur 1 schematisch dargestellten erfindungsgemäßen Vorrichtung. Die beschriebenen Teile sind klar erkennbar.

## Patentansprüche

1. Verfahren zum Regeln des Durchflusses in einer Fernwärmeübergabestation, wobei über eine in einer Bypaßleitung zum Hauptventil vorgesehene definierte Querschnittsverengung in Abhängigkeit vom geregelten Volumenstrom der Bypaßleitung eine Druckdifferenz erzeugt wird, wobei bei geringen Durchflüssen das Hauptventil geschlossen gehalten wird und erst bei Überschreiten einer vorgegebenen Druckdifferenz durch diese Druckdifferenz der Durchfluß durch das Hauptventil in der Hauptleitung geregelt wird.

2. Verfahren nach Anspruch 1, dadurch gekennzeichnet, daß in der Bypaßleitung der Durchfluß ohne Hilfsenergie geregelt wird.

3. Verfahren nach Anspruch 1, dadurch gekennzeichnet, daß der Durchfluß im Bypaß mittels Hilfsenergie geregelt wird.

4. Verfahren nach einem der vorangehenden Ansprüche, dadurch gekennzeichnet, daß der Durchfluß in der Bypaßleitung durch einen Temperaturregler geregelt wird.

5. Vorrichtung zum Regeln des Durchflusses in einer Fernwärmeübergabestation mit einem Regelorgan (2) in einer Hauptleitung (1), wobei in einer Bypaßleitung (3) zum Haupt-Regelorgan (2) ein Querschnittsminderer (3a) in Form einer Venturidüse, eines Venturirohrs oder eines Dallrohrs und ein eigener Regler (11) angeordnet sind und das Haupt-Regelorgan (2) vom Differenzdruck über den Querschnittsminderer (3a) beaufschlagbar ist.

6. Vorrichtung nach Anspruch 5, dadurch gekennzeichnet, daß das Haupt-Regelorgan (2) einen Membranantrieb (4) aufweist.

7. Vorrichtung nach Anspruch 5 oder 6, dadurch gekennzeichnet, daß das Haupt-Regelorgan mit einer sein Ventil (2a) schließenden Schließfeder (6) versehen ist.

8. Vorrichtung nach einem der Ansprüche 5 bis 7, dadurch gekennzeichnet, daß der Regler (11) in der Bypaßleitung (3) ein hilfsenergiefreier Regler ist.

9. Vorrichtung nach einem der Ansprüche 5 bis 7, dadurch gekennzeichnet, daß in der Bypaßleitung (3) ein hilfsenergiegesteuerter Regler (12, 13, 14) angeordnet ist.

10. Vorrichtung nach einem der Ansprüche 5 bis 9, dadurch gekennzeichnet, daß in der Bypaßleitung ein Druckminderer stromab des Querschnittsminderers (3) angeordnet ist.

11. Vorrichtung nach einem der Ansprüche 5 bis 9, dadurch gekennzeichnet, daß in der Bypaßleitung ein Überströmregler stromauf des Querschnittsminderers (3) angeordnet ist.

12. Vorrichtung nach einem der Ansprüche 5 bis 11, dadurch gekennzeichnet, daß in der Bypaßleitung ein durch einen Temperaturfühler (12) gesteuertes Ventil (13) angeordnet ist.

13. Vorrichtung nach einem der Ansprüche 5 bis 10, dadurch gekennzeichnet, daß in der Bypaßleitung ein Motorventil (14) angeordnet ist.

## Claims

1. Method for regulating the flow in a district heating distribution station, in which by means of a defined cross-sectional reduction provided in a bypass line to the main valve, as a function of the regulated volume flow of the bypass line, a pressure difference is produced, in which in the case of low flows the main valve is kept closed and only on exceeding a predetermined pressure difference as a result of the latter the flow is regulated by the main valve in the main line.

2. Method according to claim 1, characterized in that in the bypass line the flow is regulated without auxiliary energy.

3. Method according to claim 1, characterized in that the flow in the bypass is regulated by means of auxiliary energy.

4. Method according to one of the preceding claims, characterized in that the flow in the bypass line is regulated by a thermostat.

5. Device for regulating the flow in a district heating distribution station with a regulating member (2) in a main line (1), in which in a bypass line (3) to the main regulating member (2) are provided a cross-section reducer (3a) in the form of a venturi nozzle, a venturi tube or a twist tube and a specific regulator (11) and the main regulating member (2) is subject to the action of the differential pressure by means of the cross-section reducer (3a).

6. Device according to claim 5, characterized in that the main regulating member (2) has a diaphragm drive (4).

7. Device according to claim 5 or 6, characterized in that the main regulating member is provided with a closing spring (6) closing its valve (2a).

8. Device according to one of the claims 5 to 7, characterized in that the regulator (11) in the bypass line (3) is an auxiliary energy-free regulator.

9. Device according to one of the claims 5 to 7, characterized in that an auxiliary energy-controlled regulator (12, 13, 14) is provided in the bypass line (3).

10. Device according to one of the claims 5 to 9, characterized in that a pressure reducer is positioned in the bypass line downstream of the cross-section reducer (3).

11. Device according to one of the claims 5 to 9, characterized in that an overflow regulator is positioned in the bypass line upstream of the cross-section reducer (3).

12. Device according to one of the claims 5 to 11, characterized in that a valve (13) controlled by a temperature sensor (12) is located in the bypass line.

13. Device according to one of the claims 5 to 10, characterized in that an engine valve (14) is located in the bypass line.

## Revendications

1. Procédé de régulation du débit dans une sous-station pour chauffage urbain, dans lequel on génère une différence de pression par un rétrécissement de la section transversale prévue et définie dans une conduite de dérivation menant à la soupape principale, en fonction du flux volumique régulé de la conduite de dérivation, dans lequel la soupape principale est maintenue fermée pour les débits faibles et dans lequel le débit traversant la soupape principale dans la conduite principale est régulé par la différence de pression uniquement lorsque celle-ci dépasse une différence de pression prédéterminée.

2. Procédé selon la revendication 1,caractérisé en ce que le débit dans la conduite de dérivation est régulé sans énergie auxiliaire.

3. Procédé selon la revendication 1, caractérisé en ce que le débit dans la dérivation est régulé à l'aide d'une énergie auxiliaire.

4. Procédé selon l'une quelconque des revendications précédentes, caractérisé en ce que le débit dans la conduite de dérivation est régulé par un régulateur de température.

5. Dispositif de régulation du débit dans une sous-station pour chauffage urbain, comprenant un organe de régulation (2) dans une conduite principale (1), dans lequel un réducteur de section transversale (3a) sous la forme d'une buse ou d'un tube de Venturi ou d'un tube de Dall et un régulateur propre (11) sont disposés dans une conduite de dérivation (3) menant à l'organe de régulation principal (2), et dans lequel l'organe de régulation principal (2) peut être actionné par la différence de pression au travers du réducteur de section transversale (3a).

6. Dispositif selon la revendication 5, caractérisé en ce que l'organe de régulation principal (2) présente une commande à membrane.

7. Dispositif selon la revendication 5 ou 6, caractérisé en ce que l'organe de régulation principal présente un ressort de fermeture fermant sa soupape (2a).

8. Dispositif selon l'une quelconque des revendications 5 à 7, caractérisé en ce que le régulateur (11) disposé dans la conduite de dérivation (3) est un régulateur n'exigeant pas d'énergie auxiliaire.

9. Dispositif selon l'une quelconque des revendications 5 à 7, caractérisé en ce qu'un régulateur (12,13,14) commandé à l'aide d'une énergie auxiliaire est disposé dans la conduite de dérivation (3).

10. Dispositif selon l'une quelconque des revendications 5 à 9, caractérisé en ce qu'un réducteur de pression est disposé dans la conduite de dérivation en aval du réducteur de section transversale (3a).

11. Dispositif selon l'une quelconque des revendications 5 à 9, caractérisé en ce qu'un régulateur de trop-plein est disposé dans la conduite de dérivation en amont du réducteur de section transversale (3a).

12. Dispositif selon l'une quelconque des revendications 5 à 11, caractérisé en ce qu'une soupape (13) commandée par une sonde de température est montée dans la conduite de dérivation.

13. Dispositif selon l'une quelconque des revendications 5 à 10, caractérisé en ce qu'une soupape motorisée (14) est disposée dans la conduite de dérivation.
